# EUROPÄISCHE PATENTSCHRIFT

(11) **EP 1 852 294 B1**
(45) Veröffentlichungstag und Bekanntmachung des Hinweises auf die Patenterteilung: **15.07.2009**
(21) Anmeldenummer: 07007027.1
(22) Anmeldetag: 04.04.2007
(51) Int. Cl.: B60K 11/04, B62D 25/08

(54) **Frontend mit am Montageträger aufgenommenem Kühlmodul**
Front-end with a cooling module received on the mounting support
Bloc avant avec module de refroidissement reçu par le support d'assemblage

(30) Priorität: 06.05.2006 DE 102006021230
(43) Veröffentlichungstag der Anmeldung: 07.11.2007
(73) Patentinhaber: HBPO GmbH, 59557 Lippstadt (DE)
(72) Erfinder: Hemmersmeier, Ralf, 59557 Lippstadt (DE); Schlüter, Sascha, 26842 Ostrhauderfehn (DE); Bauer, Vitalij, 59557 Lippstadt (DE)
(74) Vertreter: Schober, Mirko

(56) Entgegenhaltungen:
- EP-A- 1 413 501
- EP-A- 1 645 491
- WO-A-99/54187
- FR-A- 2 821 813

## Beschreibung

Die Erfindung bezieht sich auf ein Frontend mit den Merkmalen des Oberbegriffs des Patentanspruchs 1 .

Ein solches Frontend ist aus der EP 1 645 491 bekannt.

Bei solchen Frontends besteht das Problem, im Falle einer notwendigen Reparatur oder eines Austauschs nicht ohne weiteres an die Befestigungspunkte des Kühlmoduls herankommen zu können. Vor allem erschwert der bei Frontends notwendige obere Querträger, bei dem es sich in der Regel um den Schloßquerträger handelt, als verbindendes Element der seitlichen Karosserieteile die Zugänglichkeit zumindest zu den oberen Befestigungspunkten am Montageträger für das Kühlmodul.

Der Erfindung liegt die Aufgabe zugrunde, die oberen Befestigungspunkte des Kühlmoduls bei einem Frontend der vorgenannten Art leichter zugänglich zu machen.

Diese Aufgabe wird bei einem Frontend der eingangs genannten Art mittels der kennzeichnenden Merkmale des Patentanspruchs 1 gelöst.

Für die Erfindung ist wesentlich, daß mit dem Lösen der oberseitig auf dem Querträger, dem Schloßquerträger, angeordneten Abdeckung sowie nach Wegnahme der Abdekkung die die Lagerzapfen am Kühlmodul aufnehmenden Lagerschalen der Aufnahmelager offen sind, so daß in umgekehrter Bewegungsfolge, wie sie beim Einbau des Kühlmoduls vorgenommen wird, das Kühlmodul aus seinen oberen Aufnahmelagern ausgehängt werden kann. Zweckmäßig sind die weiteren Befestigungspunkte für das Kühlmodul am Montageträger so angeordnet, daß bei offenen Lagerschalen der oberen Aufnahmelager das Kühlmodul nach oben hin herausgehoben oder von oben her in den Montageträger eingesetzt werden kann.

Vorteilhafte Ausgestaltungsmerkmale der Erfindung ergeben sich aus den Unteransprüchen.

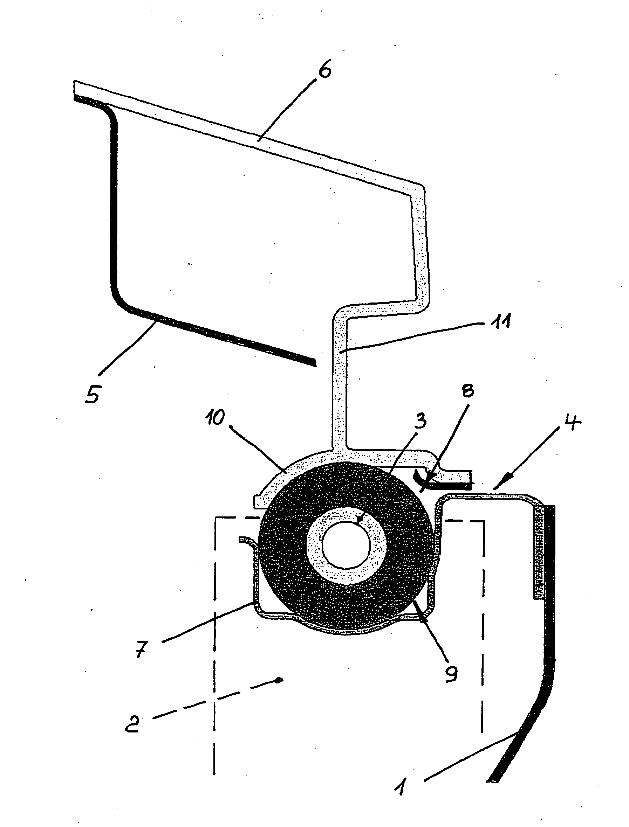

Die Erfindung wird nachfolgend anhand der Zeichnung an einem Ausführungsbeispiel noch näher erläutert. Die Zeichnung zeigt in schematischer Seitansicht einen der oberen Aufhängepunkte eines Kühlmoduls am Montageträger eines PKW-Frontends.

Im einzelnen zeigt die Zeichnung einen der seitlichen Vertikalträger eines üblichen Montageträgers 1, in dessen zentralem Bereich ein Kühlmodul 2, welches auch aus mehreren Kühlkomponenten bestehen kann, aufgenommen wird. An den oberen Ecken ist das Kühlmodul 2 mit seitlich vorstehenden Lagerzapfen 3 versehen, auf die vorzugsweise ein elastischer Dämpfungsring 9, nämlich ein sogenanntes Gummilager, aufgesteckt ist.

Die Halterung der Lagerzapfen 3 am Kühlmodul 2 erfolgt in Aufnahmelagern 4, und zwar in daran ausgebildeten Lagerschalen 7. Die Aufnahmelager 4 sind fest am Montageträger 1 angeordnet, an den sie einstückig angeformt oder als Formteile angesetzt sein können. An der Oberseite haben die Lagerschalen 7 eine Einführöffnung 8, um den zugehörigen Lagerzapfen 3 des Kühlmoduls 2 samt dem darauf aufgesteckten Dämpfungsring 9 von oben her aufnehmen zu können.

Der Montageträger 1 weist einen oberseitigen Querträger 5 auf, bei dem es sich um einen Schloßquerträger handelt, an dem das zumindest eine Schloß der Fahrzeugfronthaube angeordnet ist und der mit seinen beiden Enden die seitlichen Karosserieteile im Frontbereich des Fahrzeugs miteinander verbindet. Oberseitig ist auf dem Querträger 5 eine Abdeckung 6 angeordnet, die lösbar befestigt ist und somit vom Querträger 5 abgenommen werden kann. An die Abdeckung 6 ist ein nach unten vorstehender Steg 11 angeformt, der an der Vorderkante des Querträgers 5 vorbeireicht. Dieser Steg 11, der auch als Wandung oder Zapfen ausgeführt sein kann, trägt an seinem Unterende ein schalenförmiges Verschlußteil 10, welches bei befestigter Abdeckung 6 auf dem nach oben hin liegenden Umfangsbereich des Dämpfungsrings 9 am Lagerzapfen 3 des Kühlmoduls 2 aufsitzt. Dadurch ist der Lagerzapfen 3 am Kühlmodul 2 samt dem darauf angeordneten Dämpfungsring 9 in der durch die Lagerschale 7 gebildeten Aufnahme gefangen, die Einführöffnung 8 der Lagerschale 7 ist dementsprechend geschlossen. Nach Abnahme der Abdeckung 6 ist die Einführöffnung 8 offen, der Lagerzapfen 6 kann nunmehr durch Anheben des Kühlmoduls 2 nach oben aus der Lagerschale 7 herausgehoben werden. Bei entsprechender Gestaltung des Querträgers 5 und der unteren Befestigungspunkte des Kühlmoduls 2 kann nach oben hin das Kühlmodul aus seiner Halterung herausgehoben und ggf. nach Reparatur oder Austausch in umgekehrter Bewegungsrichtung wieder im zentralen Bereich des Montageträgers 1 angeordnet werden. Mit dem Befestigen der Abdeckung 6 ist das Kühlmodul in seiner vorbestimmten Betriebslage wieder gesichert.

Grundsätzlich kann sich die Einführöffnung 8 auch an der Vorder- oder der Rückseite der Lagerschale 7 befinden, je nachdem aus welcher Richtung der Lagerzapfen 3 am Kühlmodul 2 ein- oder ausgeführt werden soll, was von den Montagemöglichkeiten für das Kühlmodul 2 abhängt. In einem solchen Fall übergreift das an der Abdeckung 6 befindliche Verschlußteil 10 die Lagerschale 7 entweder an der Vorder- oder an der Rückseite.

## Patentansprüche

1. Frontend für Personen- und Kleinlastkraftwagen mit einem Montageträger (1) und mit einem daran aufgenommenen Kühlmodul (2), welches in seinem oberen Bereich vorstehende Lagerzapfen (3) hat, zu deren Halterung am Montageträger (1) Aufnahmelager (4) vorgesehen sind, wobei der Montageträger (1) einen oberen Querträger (5) aufweist, der sich oberhalb der Aufnahmelager (4) zur Halterung der Lagerzapfen (3) am Kühlmodul (2) erstreckt und auf dessen Oberseite eine lösbar befestigte Abdeckung (6) aufgesetzt ist,
**dadurch gekennzeichnet,**
**daß** die Aufnahmelager (4) am Montageträger (1) zum Einführen der Lagerzapfen (3) am Kühlmodul (2) einseitig offene Lagerschalen (7) aufweisen und an die Abdeckung (6) durch den oberen Querträger (5) des Montageträgers (1) hindurch- oder an diesem vorbeigreifende, die offene Seite der Lagerschalen (7) übergreifende Verschlußglieder (10, 11) angeformt sind.

2. Frontend nach Anspruch 1,
**dadurch gekennzeichnet,**
**daß** die Einführöffnung (8) der Lagerschalen (7) am Montageträger (1) nach oben hin angeordnet ist und die Verschlußglieder (10, 11) in ihrer Schließlage von oben her die Einführöffnung (8) der Lagerschalen (7) übergreifen.

3. Frontend nach Anspruch 1 oder 2,
**dadurch gekennzeichnet,**
**daß** auf die Lagerzapfen (3) am Kühlmodul (2) elastische Dämpfungsringe (9) aufgesteckt sind, an deren Außendurchmesser die Weite der Einführöffnung (8) der Lagerschalen (7) am Montageträger (1) angepaßt ist.

## Claims

1. Front-end for motor cars and light trucks with a mounting support (1) and with a cooling module (2) mounted thereon which has in its upper area protruding bearing pins (3) for which socket bearings (4) are provided on the mounting support (1) to hold same thereon, wherein the mounting support (1) has an upper cross member (5) which extends above the socket bearings (4) for holding the bearing pins (3) on the cooling module (2) and on the top side of which is fitted a detachably fixed cover (6) **characterised in that** the socket bearings (4) on the mounting support (1) have bearing seats (7) open on one side for inserting the bearing pins (3) on the cooling module (2) and closure members (10, 11) are moulded on the cover (6) so as to pass through or past the upper cross member (5) of the mounting support (1) and engage over the open side of the bearing seats (7,8).

2. Front-end according to claim 1 **characterised in that** the insert opening (8) of the bearing seats (7) is disposed towards the top on the mounting support (1) and the closure members (10, 11) in their closed position engage from above over the insert opening (8) of the bearing seats (7).

3. Front-end according to claim 1 or 2 **characterised in that** elastic damping rings (9) are fitted onto the bearing pins (3) on the cooling module (2), with the width of the insert opening (8) of the bearing seats (7) on the mounting support (1) being adapted to the external diameter of the rings.

## Revendications

1. Bloc avant pour voitures particulières et camionnettes, avec un support de montage (1) et avec un module de refroidissement (2) qui, reçu par celui-ci, est équipé, dans sa zone supérieure, de tourillons (3) en saillie, pour le maintien desquels, des logements (4) sont prévus sur le support de montage (1), ledit support de montage (1) présentant une traverse supérieure (5), qui s'étend au-dessus des logements (4) pour le maintien des tourillons (3) sur le module de refroidissement (2), et sur la face supérieure de laquelle est placé un recouvrement (6), fixé de manière amovible,
**caractérisé en ce que** les logements (4), prévus sur le support de montage (1), présentent des coquilles de support (7), ouvertes sur un côté, pour l'introduction des tourillons (3) équipant le module de refroidissement (2), et que, sur le recouvrement (6), sont formés des organes de fermeture (10, 11), qui, passant à travers la traverse supérieure (5), ou à côté de celle-ci, embrassent d'en haut le côté ouvert des coquilles de support (7).

2. Bloc avant selon la revendication 1,
**caractérisé en ce que** l'ouverture d'introduction (8) des coquilles de support (7) est disposée, vers le haut, sur le support de montage (1), et que les organes de fermeture (10, 11), dans leur position de fermeture, embrassent d'en haut l'ouverture d'introduction (8) des coquilles de support (7).

3. Bloc avant selon revendication 1 ou 2,
**caractérisé en ce que**, sur les tourillons (3), équipant le module de refroidissement (2), sont rapportés des anneaux amortisseurs (9) élastiques, au diamètre extérieur desquels est adaptée la largeur de l'ouverture d'introduction (8) des coquilles de support (7) sur le support de montage (1).
